# FASCICULE DE BREVET EUROPEEN

(11) **EP 0 738 656 B1**
(45) Date de publication et mention de la délivrance du brevet: **25.10.2000**
(21) Numéro de dépôt: 96400817.1
(22) Date de dépôt: 17.04.1996
(51) Int. Cl.: B64G 1/44, F16C 11/10, F16D 9/02

(54) **Dispositif de commande d'escamotage d'une structure mobile**
Einziehsteuervorrichtung einer bewegbaren Struktur
Retract control device of a movable structure

(30) Priorité: 19.04.1995 FR 9504642
(43) Date de publication de la demande: 23.10.1996
(73) Titulaire: ALCATEL, 75008 Paris (FR)
(72) Inventeur: Viale, Daniel, 83440 Tanneron (FR)
(74) Mandataire: Dubois-Chabert, Guy

(56) Documents cités:
- EP-A- 0 309 650
- EP-A- 0 456 950
- EP-A- 0 496 183
- WO-A-91/19645
- FR-A- 2 667 842

## Description

### Domaine technique

L'invention concerne un dispositif permettant de commander l'escamotage d'une structure mobile normalement reliée à des moyens de commande de déplacement par un mécanisme de transmission, notamment lors d'une défaillance de ces moyens de commande de déplacement.

Une application privilégiée d'un tel dispositif concerne le domaine spatial. Ainsi, les systèmes optiques embarqués sur les engins spatiaux tels que les satellites et les sondes, peuvent ne plus être capables de remplir leur mission de façon satisfaisante si une structure initialement mobile utilisée, par exemple pour permettre un réglage ou un étalonnage du système, se bloque dans une position quelconque, notamment à la suite d'une défaillance du moteur qui en commande normalement le déplacement, ou d'une rupture ou d'un grippage d'un élément mécanique de liaison.

### Etat de la technique

Dans le document WO-A-91 19 645, on a proposé un dispositif de commande d'escamotage d'une structure mobile, dans lequel cette structure est ramenée dans une position escamotée par des ressorts spiraux ou de torsion, lorsqu'une cisaille pyrotechnique est actionnée pour déconnecter le moteur de la structure mobile dont le déplacement est commandé par ce moteur.

Dans la pratique, une telle cisaille pyrotechnique présente un encombrement et une masse importants. De plus, sa mise en oeuvre produit un choc qui peut endommager certains éléments du système optique situé à proximité, ou en modifier le réglage.

Le document WO-A-91 19 645 propose également, en variante, de remplacer la cisaille pyrotechnique par une ventouse électromagnétique ou un couteau thermique. Cependant, il s'agit là encore de systèmes encombrants et lourds. De plus, leur fiabilité apparaît contestable.

Par ailleurs, comme l'illustre le document FR-A-2 648 199, on a déjà proposé d'embarquer sur un engin spatial un organe réalisé en un matériau à mémoire de forme, pour commander le dégerbage d'un élément tel qu'une antenne ou un panneau solaire, après le lancement.

Dans le même esprit, le document FR-A-2 667 842 propose également, sur un engin spatial, d'utiliser des organes en matériau à mémoire de forme pour commander le dégerbage de mécanismes rotatifs comprenant des roulements à billes, après le lancement de l'engin.

Dans ces deux derniers documents, les organes en matériau à mémoire de forme sont toujours utilisés pour assurer un dégerbage, c'est-à-dire la mise en état de marche d'un système qui doit être bridé lors du lancement afin d'éviter qu'il ne soit endommagé par les violentes vibrations qui se produisent pendant cette période. En revanche, il n'y est jamais envisagé d'utiliser un tel organe pour commander l'escamotage d'une structure normalement mobile.

### Exposé de l'invention

L'invention a précisément pour objet un dispositif original permettant de commander, si cela s'avère nécessaire, l'escamotage d'une structure mobile sans induire de choc et d'une manière particulièrement simple et fiable, pour un encombrement et une masse moindres que ceux des dispositifs comparables existants.

Conformément à l'invention, ce résultat est obtenu au moyen d'un dispositif de commande d'escamotage d'une structure mobile, ce dispositif comprenant des moyens de commande de déplacement, un mécanisme de transmission, reliant normalement lesdits moyens de commande de déplacement à la structure mobile, des moyens de liaison déconnectables compris dans le mécanisme de transmission, et des moyens élastiques agissant en permanence sur la structure mobile, pour amener automatiquement cette dernière dans une position escamotée, lors d'une déconnexion des moyens de liaison déconnectables, le dispositif étant caractérisé par le fait qu'il comprend de plus un organe en un matériau à mémoire de forme, apte à agir sur les moyens de liaison déconnectables, pour en commander la déconnexion, lors d'un changement d'état du matériau, et des moyens de chauffage associés audit organe, pour en commander le changement d'état, lors du franchissement d'un seuil de température prédéterminé.

Dans une forme de réalisation préférentielle, le mécanisme de transmission comprend une première pièce apte à être actionnée par les moyens de commande de déplacement et une deuxième pièce portant la structure mobile. Les moyens de liaison déconnectables comportent alors un tirant qui traverse la première pièce et la deuxième pièce, de façon à les solidariser normalement l'une de l'autre par frottement.

Le tirant définit alors avantageusement un axe de pivotement de la deuxième pièce par rapport à la première pièce, les moyens élastiques exerçant en permanence un couple de pivotement entre la première pièce et la deuxième pièce, autour de cet axe.

Selon la forme de réalisation préférentielle de l'invention, l'une des première et deuxième pièces comporte une partie tubulaire qui présente deux surfaces d'extrémité tronconiques, l'autre des première et deuxième pièces comportant deux embouts, reliés l'un à l'autre par le tirant, au travers de la partie tubulaire. Des surfaces d'appui tronconiques formées sur les embouts et complémentaires des surfaces d'extrémité tronconiques de la partie tubulaire sont normalement pressées contre ces dernières surfaces par le tirant.

Dans ce cas, l'organe en un matériau à mémoire de forme est un organe tubulaire, monté sur le tirant à l'intérieur de la partie tubulaire, de façon à pouvoir écarter les surfaces d'appui tronconiques formées sur les embouts des surfaces d'extrémité tronconiques formées sur la partie tubulaire, lors du changement d'état du matériau.

Avantageusement, des rondelles thermiquement isolantes sont interposées entre les embouts et l'organe en un matériau à mémoire de forme, de façon à assurer une montée en température homogène de cet organe avec un minimum de dispersion.

Dans la forme de réalisation précitée, les surfaces d'extrémité tronconiques et les surfaces d'appui tronconiques complémentaires ne sont pas auto-bloquantes.

De préférence, la première pièce est supportée de façon pivotante par une structure fixe, autour de l'axe défini par le tirant. Les moyens de commande de déplacement comprennent alors un moteur supporté par la structure fixe, et dont un arbre de sortie entraîne la première pièce en rotation.

Dans la forme de réalisation préférentielle de l'invention, le tirant comporte une région de moindre résistance, autorisant son allongement sous l'action de l'organe en un matériau à mémoire de forme, lors du changement d'état de ce matériau.

### Brève description des dessins

On décrira à présent, à titre d'exemple non limitatif, une forme de réalisation préférentielle de l'invention, en se référant aux dessins annexés, dans lesquels :
- la figure 1 est une vue de face, en coupe partielle, représentant un mécanisme permettant de commander le déplacement d'une structure mobile telle qu'un miroir, ce mécanisme incorporant un dispositif de commande d'escamotage conforme à l'invention ; et
- la figure 2 est une vue de côté du mécanisme illustré sur la figure 1.

### Exposé détaillé d'un mode de réalisation

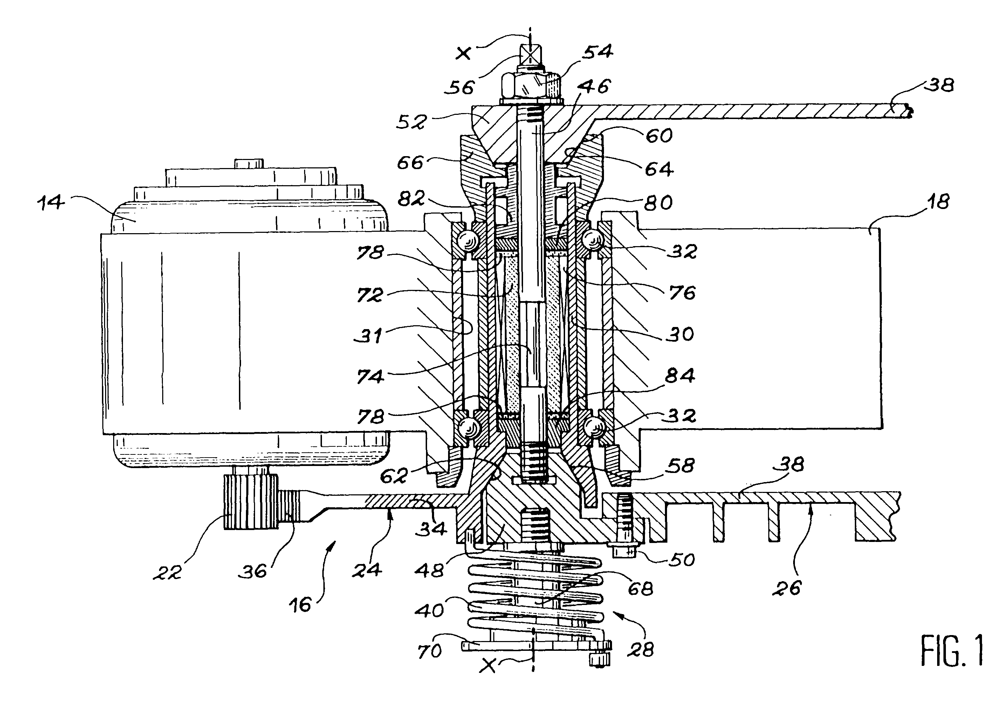

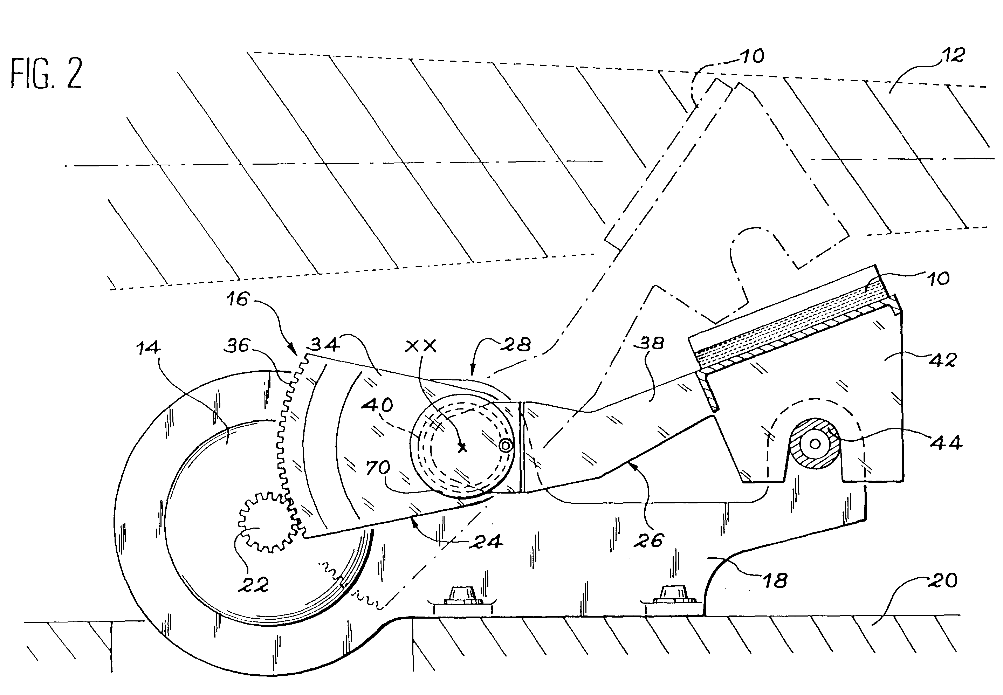

Le mécanisme illustré sur les figures 1 et 2 est prévu pour être embarqué sur un engin spatial tel qu'un satellite ou une sonde. Ce mécanisme est conçu pour commander le pivotement contrôlé d'une structure mobile constituée par un miroir 10 (figure 2), autour d'un axe de pivotement XX. Comme on l'a illustré schématiquement en traits mixtes sur la figure 2, ce pivotement permet, après le lancement, d'amener le miroir 10 sur le chemin optique 12 d'un système optique (non représenté), dans une position éventuellement réglable. Dans cette position, le miroir 10 permet d'effectuer sur le système optique une opération telle qu'un étalonnage ou un réglage. Lorsque cette opération est achevée, le fonctionnement du système optique suppose l'effacement du miroir 10 dans sa position représentée en trait plein. Si, pour une raison quelconque, cet effacement ne peut être obtenu, le système optique devient inopérant.

Le mécanisme représenté sur les figures 1 et 2 comprend un moteur électrique pas à pas 14 constituant des moyens de commande de déplacement du miroir 10, ainsi qu'un mécanisme de transmission 16, au travers duquel le moteur électrique 14 entraîne le miroir 10. L'ensemble est monté sur une structure support fixe 18 prévue pour être fixée sur la structure 20 du satellite ou de la sonde comme on l'a représenté sur la figure 2.

Le corps du moteur électrique 14 est monté directement dans la structure support fixe 18. Cette dernière définit également l'axe de pivotement XX du miroir 10, comme on le verra ultérieurement.

Le mécanisme de transmission 16 comprend un pignon 22 calé sur l'arbre de sortie du moteur électrique 14, ainsi qu'une première pièce 24 et une deuxième pièce 26, normalement solidarisées l'une de l'autre par des moyens de liaison déconnectables 28.

La première pièce 24 du mécanisme de transmission 16 comprend une partie tubulaire 30 montée dans un alésage 31 traversant la structure support fixe 18 selon l'axe XX. Plus précisément la partie tubulaire 30 est montée dans l'alésage 31 par des paliers 32, tels que des roulements à billes à contact oblique, de telle sorte que la première pièce 24 peut pivoter librement autour de l'axe XX par rapport à la structure support fixe 18. A l'une de ses extrémités, la partie tubulaire 30 de la première pièce 24 comporte un plateau 34 terminé par un secteur denté 36 en prise sur le pignon 22. Grâce à cet agencement, on comprend qu'une rotation dans l'un ou l'autre sens du pignon 22, commandée par le moteur électrique 14, a pour effet de faire pivoter la première pièce 24 autour de l'axe XX.

La deuxième pièce 26 du mécanisme de transmission 16 comprend une partie 42 porte-miroir, ainsi que deux plaques parallèles 38 qui font saillie vers l'axe XX à partir de la partie porte-miroir. Les extrémités des plaques 38 sont normalement solidarisées de la première pièce 24 par les moyens de liaison déconnectables 28. Afin d'assurer un bon fonctionnement de ces moyens de liaison déconnectables 28, les plaques 38 présentent une certaine souplesse ou flexibilité parallèlement à l'axe XX. Ce résultat peut être aisément obtenu en leur donnant une faible épaisseur et en les réalisant dans un matériau approprié.

Les moyens de liaison déconnectables 28 appartiennent à un dispositif de commande d'escamotage de la structure mobile 10. Lorsque ce dispositif de commande d'escamotage est actionné, les moyens de liaison déconnectables 28 déconnectent la deuxième pièce 26 de la première pièce 24. Un ressort spiral ou de torsion 40, dont les extrémités sont fixées respectivement sur la première pièce 24 et sur la deuxième pièce 26, commande alors automatiquement le pivotement de cette deuxième pièce dans le sens inverse des aiguilles d'une montre en considérant la figure 2, jusqu'à ce que la partie 42 porte-miroir de la deuxième pièce 26, qui porte le miroir 10, vienne en appui contre une butée 44 formée à cet effet sur la structure support fixe 18. On amène ainsi automatiquement le miroir 10 dans la position escamotée illustrée en trait plein sur la figure 2, quelle que soit la position occupée initialement par ce miroir. Dans cette position escamotée, le miroir 10 est totalement décalé du chemin optique 12, de telle sorte que le système optique correspondant peut continuer à être utilisé sans dommage.

On décrira à présent plus en détail le dispositif de commande d'escamotage selon l'invention, en se référant à nouveau à la figure 1.

Les moyens de liaison déconnectables 28 comprennent un tirant 46 disposé selon l'axe XX et reliant les extrémités des plaques 38 en traversant la partie tubulaire 30, placée entre ces extrémités.

Plus précisément, une extrémité filetée du tirant 46 est vissée dans un embout démontable 48 formant l'extrémité de l'une des plaques 38. L'embout 48 est rapporté sur cette plaque 38 par des vis 50. L'extrémité de l'autre plaque 38, terminée par un deuxième embout 52, est traversée par le tirant 46. Dans sa partie qui fait saillie au-delà du deuxième embout 52, le tirant 46 comporte également une partie filetée sur laquelle est reçu un écrou 54. Au-delà de sa partie filetée recevant l'écrou 54, le tirant 46 comporte une tête de manoeuvre 56 qui permet de visser le tirant 46 dans l'embout démontable 48, au moyen d'une clé. Sur leurs faces en vis-à-vis, les embouts 48 et 52 comportent respectivement des surfaces d'appui tronconiques 58, 60.

Le tirant 46 est monté coaxialement à l'intérieur de la partie tubulaire 30 de la première pièce 24, de façon telle que les surfaces d'appui tronconiques 58 et 60 formées sur les embouts 48 et 52, soient normalement pressées contre des surfaces d'extrémité tronconiques 62 et 64, complémentaires des surfaces 58 et 60 et formées dans cette partie tubulaire 30.

De façon plus précise, la surface d'extrémité tronconique 62 est formée directement sur la partie tubulaire 30 à son extrémité portant le plateau 34, alors que la surface d'extrémité tronconique 64 est formée sur une bague 66 qui coulisse librement sur l'extrémité opposée de la partie tubulaire 30. Cet agencement en deux parties permet d'assurer un calage efficace des bagues intérieures des paliers à billes 32, par l'intermédiaire d'une entretoise 67 placée entre ces bagues, lorsqu'un effort de compression est exercé entre les embouts 48 et 52 par le tirant 46.

A l'opposé de la surface d'appui tronconique 58, l'embout rapporté 48 supporte une colonnette 68 terminée par un disque 70. La colonnette 68 est disposée selon l'axe XX, à l'intérieur du ressort spiral ou de torsion 40. Dans la pratique, l'extrémité de ce ressort spiral ou de torsion lié à la deuxième pièce 26 est fixée sur le disque 70 comme le montre la figure 1.

En plus des moyens de liaison déconnectables 28 et des moyens élastiques constitués par le ressort spiral ou de torsion 40, le dispositif de commande d'escamotage du miroir 10 comprend un organe tubulaire 72, en un matériau à mémoire de forme, placé entre les embouts 48 et 52 autour du tirant 46 et à l'intérieur de la partie tubulaire 30 de la première pièce 24. L'organe 72 en un matériau à mémoire de forme est dimensionné de façon telle que sa longueur n'empêche pas la solidarisation par frottement des pièces 24 et 26, par l'intermédiaire des surfaces tronconiques 58 et 62 d'une part et 60 et 64 d'autre part, lorsque l'écrou 54 est serré et lorsque le mécanisme se trouve à une température de fonctionnement normal.

En revanche, lorsque la température de l'organe 72 en un matériau à mémoire de forme s'élève au-delà d'un seuil de température prédéterminé (compris, par exemple, entre 60°C et 100°C), le dimensionnement est tel que l'allongement de cet organe (par exemple, d'environ 1 mm) a pour effet d'écarter les embouts 48 et 52 suffisamment pour supprimer la solidarisation par frottement des pièces 24 et 26. Pour que la désolidarisation de ces pièces s'effectue correctement, il est à noter que les liaisons par frottement assurées normalement entre les surfaces tronconiques complémentaires 58 et 62 d'une part et 60 et 64 d'autre part ne sont pas auto-bloquantes.

Pour que l'allongement de l'organe 72 en un matériau à mémoire de forme ait bien pour effet un écartement des embouts 48 et 52, on voit sur la figure 1 que le tirant 46 présente une région 74 de moindre résistance. Cette région 74 peut notamment être constituée par une zone dans laquelle le diamètre du tirant 46 est suffisamment réduit pour permettre son allongement, lorsqu'un effort tendant à écarter les embouts 48 et 52 est appliqué par l'organe 72 en un matériau à mémoire de forme.

Afin d'assurer le franchissement par le matériau constituant l'organe tubulaire 72 de sa température de changement de phase, cet organe tubulaire est entouré par des moyens de chauffage 76 constitués par exemple par une résistance électrique. L'alimentation électrique de la résistance constituant les moyens de chauffage 76 est assurée à partir d'une source extérieure (non représentée) par des conducteurs électriques qui n'apparaissent pas sur les figures.

Dans la forme de réalisation représentée, une rondelle isolante 78 est placée à chaque extrémité de l'organe tubulaire 72 en un matériau à mémoire de forme, afin d'assurer une montée en température homogène et avec un minimum de dispersion. En outre, une rondelle d'épaisseur 80 et une entretoise d'appui 82 sont interposées entre l'embout 52 et la rondelle isolante 78 adjacente. Par ailleurs, une bague d'appui 84 est interposée entre l'embout 48 et la rondelle isolante adjacente 78.

L'entretoise d'appui 82 et la bague d'appui 84 permettent de transmettre l'allongement de l'organe tubulaire 72 aux embouts 52 et 48. La rondelle d'épaisseur 80 est usinée à la demande afin d'assurer le jeu minimum de bon fonctionnement de l'organe tubulaire 72 en un matériau à mémoire de forme.

Au moment du lancement, le mécanisme représenté sur les figures est verrouillé dans la position escamotée représentée en trait plein sur la figure 2 par un dispositif de gerbage (non représenté) associé à la butée 44. Ce dispositif de gerbage peut être réalisé de manière quelconque et ne fait pas partie de l'invention.

Lorsque le satellite ou la sonde se trouve dans des conditions opérationnelles, le dispositif de gerbage est actionné de façon à libérer le mécanisme. Le miroir 10 peut alors être amené à volonté dans la position désirée, à l'aide du moteur électrique 14 par exemple pour effectuer un étalonnage ou un réglage du système optique. Pour permettre l'utilisation du système optique, il est alors nécessaire d'escamoter le miroir 10 en agissant à nouveau sur le moteur 14.

Par suite d'un incident, dû par exemple à une défaillance du moteur 14 ou de son système de commande, il peut devenir impossible d'escamoter le miroir 10 à l'aide du moteur 14. Dans ces conditions, la poursuite de la mission nécessite d'amener ce miroir dans sa position d'escamotage représentée en trait plein sur la figure 2 par d'autres moyens.

Conformément à l'invention, cet escamotage peut être commandé aisément en chauffant l'organe tubulaire 72 en un matériau à mémoire de forme jusqu'à la température de changement de phase de ce matériau, comprise par exemple entre 60°C et 100°C. Cet échauffement est assuré par les moyens de chauffage 76. Lorsque le changement de phase se produit, l'organe tubulaire 72 s'allonge d'une valeur (par exemple environ 1 mm) suffisante pour assurer un décollement des surfaces tronconiques 58 et 62 d'une part, 60 et 64 d'autre part, par allongement de la région 74 du tirant 46. Dès que le décollement a eu lieu, le ressort spiral ou de torsion 40, qui agit en permanence entre les pièces 24 et 26 pour exercer un couple de pivotement entre ces pièces, entraîne en rotation la deuxième pièce 26 dans le sens inverse des aiguilles d'une montre en considérant la figure 2. Le pivotement de la deuxième pièce 26 se poursuit jusqu'à ce que la partie 42 porte-miroir vienne en appui contre la butée 44 comme on l'a décrit précédemment.

Le résultat désiré est ainsi obtenu sans choc et au moyen d'un dispositif de commande d'escamotage particulièrement simple, léger et peu encombrant.

Il est à noter que l'invention n'est pas limitée à la forme de réalisation qui vient d'être décrite en se référant aux figures. Ainsi, même si elle présente un intérêt évident dans le domaine spatial, elle peut aussi être utilisée dans d'autres domaines. Par ailleurs, le dispositif peut être utilisé pour commander l'escamotage d'un organe mobile quelconque, dont le miroir décrit ne constitue qu'un exemple dans le cas particulier d'un système optique. Enfin, il est à noter que le déplacement de l'organe mobile peut être un mouvement quelconque tel qu'une rotation, une translation, ou un mouvement plus complexe.

## Revendications

1. Dispositif de commande d'escamotage d'une structure mobile (10), ce dispositif comprenant des moyens de commande de déplacement (14), un mécanisme de transmission (16), reliant normalement lesdits moyens de commande de déplacement à la structure mobile, des moyens de liaison déconnectables (28) compris dans le mécanisme de transmission, et des moyens élastiques (40) agissant en permanence sur la structure mobile (10), pour amener automatiquement cette dernière dans une position escamotée, lors d'une déconnexion des moyens de liaison déconnectables (28), le dispositif étant caractérisé par le fait qu'il comprend de plus un organe (72) en un matériau à mémoire de forme, apte à agir sur les moyens de liaison déconnectables (28), pour en commander la déconnexion, lors d'un changement d'état du matériau, et des moyens de chauffage (76) associés audit organe, pour en commander le changement d'état, lors du franchissement d'un seuil de température prédéterminé.

2. Dispositif selon la revendication 1, caractérisé par le fait que, le mécanisme de transmission (16) comprenant une première pièce (24) apte à être actionnée par les moyens de commande de déplacement (14) et une deuxième pièce (26) portant la structure mobile (10), les moyens de liaison déconnectables (12) comportent un tirant (46) traversant la première pièce et la deuxième pièce, de façon à les solidariser normalement l'une de l'autre par frottement.

3. Dispositif selon la revendication 2, caractérisé par le fait que le tirant (46) définit un axe de pivotement de la deuxième pièce (26) par rapport à la première pièce (24), les moyens élastiques (40) exerçant en permanence un couple de pivotement entre la première pièce et la deuxième pièce, autour de cet axe.

4. Dispositif selon l'une quelconque des revendications 2 et 3, caractérisé par le fait que l'une (24) des première et deuxième pièces comporte une partie tubulaire (30) qui présente deux surfaces d'extrémité tronconiques (62,64), l'autre (26) des première et deuxième pièces comportant deux embouts (48,52), reliés l'un à l'autre par ledit tirant (46), au travers de la partie tubulaire, de telle sorte que des surfaces d'appui tronconiques (58,60) formées sur les embouts et complémentaires des surfaces d'extrémité tronconiques formées sur la partie tubulaire soient normalement pressées contre ces dernières surfaces par le tirant.

5. Dispositif selon la revendication 4, caractérisé par le fait que l'organe (72) en un matériau à mémoire de forme est un organe tubulaire, monté sur le tirant (46) à l'intérieur de la partie tubulaire (30), de façon à pouvoir écarter les surfaces d'appui tronconiques (58,60) formées sur les embouts (48,52) des surfaces d'extrémité tronconiques (62,64) formées sur la partie tubulaire (30), lors du changement d'état du matériau.

6. Dispositif selon la revendication 5, caractérisé par le fait que des rondelles (78) thermiquement isolantes sont interposées entre les embouts (48,52) et l'organe (72) en un matériau à mémoire de forme.

7. Dispositif selon l'une quelconque des revendications 5 et 6, caractérisé par le fait que les moyens de chauffage (76) sont placés autour de l'organe (72) en un matériau à mémoire de forme.

8. Dispositif selon l'une quelconque des revendications 4 à 7, caractérisé par le fait que les surfaces d'extrémité tronconiques (62,64) et les surfaces d'appui tronconiques (58,60) ne sont pas auto-bloquantes.

9. Dispositif selon l'une quelconque des revendications 3 à 8, caractérisé par le fait que la première pièce (24) est supportée de façon pivotante par une structure fixe (18), autour de l'axe défini par le tirant, les moyens de commande de déplacement comprenant un moteur (14) supporté par la structure fixe, et dont un arbre de sortie entraîne la première pièce en rotation.

10. Dispositif selon l'une quelconque des revendications 2 à 8, caractérisé par le fait que le tirant (46) comporte une région (74) de moindre résistance, autorisant son allongement sous l'action de l'organe (72) en un matériau à mémoire de forme, lors du changement d'état de ce matériau.

## Patentansprüche

1. Einzieh- bzw. Versenkungssteuervorrichtung einer bewegbaren Struktur (10), wobei die Vorrichtung umfaßt: eine Bewegungssteuereinrichtung (14), einen Übertragungsmechanismus (16), der normalerweise die Bewegungssteuereinrichtung mit der bewegbaren Struktur verbindet, im Übertragungsmechanismus enthaltene, lösbare Verbindungsmittel (28) sowie elastische Mittel (40), die permanent auf die bewegbare Struktur (10) einwirken, um diese letztere beim Lösen der lösbaren Verbindungsmittel (28) automatisch in eine eingezogene bzw. versenkte Position zu bringen, wobei die Vorrichtung dadurch gekennzeichnet ist, daß sie ferner ein Element (72) aus einem Material mit Formgedächtnis aufweist, das bei einer Zustandsänderung des Materials auf die lösbaren Verbindungsmittel (28) einzuwirken vermag, um das Lösen der Verbindung derselben zu steuern, sowie Heizmittel (76), die dem Element zugeordnet sind, um bei Überschreiten einer vorbestimmten Temperaturschwelle dessen Zustandsänderung zu steuern.

2. Vorrichtung gemäß Anspruch 1, dadurch gekennzeichnet, daß der Übertragungsmechanismus (16) ein durch die Bewegungssteuereinrichtung (14) betätigbares erstes Teil (24) sowie ein die bewegbare Struktur (10) tragendes zweites Teil (26) aufweist, wobei die lösbaren Verbindungsmittel (28) einen das erste Teil und das zweite Teil durchsetzenden Zugstab bzw. Stehbolzen (46) umfassen, um diese durch Reibung normalerweise formschlüssig miteinander zu verbinden.

3. Vorrichtung gemäß Anspruch 2, dadurch gekennzeichnet, daß der Zugstab bzw. Stehbolzen (46) eine Dreh-/Schwenkachse des zweiten Teils (26) in Bezug auf das erste Teil (24) festlegt, wobei die elastischen Mittel (40) permanent ein Drehmoment zwischen dem ersten Teil und dem zweiten Teil um diese Achse aufbringen.

4. Vorrichtung gemäß einem der Ansprüche 2 und 3, dadurch gekennzeichnet, daß eines (24) der ersten und zweiten Teile einen rohrförmigen Abschnitt (30) umfaßt, der zwei kegelstumpfförmige Endflächen (62,64) aufweist, wobei das andere (26) der ersten und zweiten Teile zwei über den rohrförmigen Abschnitt durch den Stehbolzen (46) miteinander verbundene Ansatz- bzw. Muffenstücke (48,52) umfaßt, so daß an den Muffenstücken ausgebildete kegelstumpfförmige Auflageflächen (58,60), die zu den an dem rohrförmigen Abschnitt ausgebildeten kegelstumpfförmigen Endflächen komplementär sind, normalerweise durch den Stehbolzen gegen letztere Oberflächen gedrückt werden.

5. Vorrichtung gemäß Anspruch 4, dadurch gekennzeichnet, daß das Element (72) aus einem Material mit Formgedächtnis ein rohrförmiges Element ist, das im Inneren des rohrförmigen Abschnitts (30) am Stehbolzen (46) derart angebracht ist, daß es bei einer Zustandsänderung des Materials die an den Muffenstücken (48,52) ausgebildeten kegelstumpfförmigen Auflageflächen (58,60) und die an dem rohrförmigen Abschnitt (30) ausgebildeten kegelstumpfförmigen Endflächen (62,64) in Abstand zueinander zu bringen vermag.

6. Vorrichtung gemäß Anspruch 5, dadurch gekennzeichnet, daß wärmeisolierende Scheiben (78) zwischen die Muffenstücke (48,52) und das Element (72) aus einem Material mit Formgedächtnis eingefügt sind.

7. Vorrichtung gemäß einem der Ansprüche 5 und 6, dadurch gekennzeichnet, daß die Heizmittel (76) um das Element (72) aus einem Material mit Formgedächtnis angeordnet sind.

8. Vorrichtung gemäß einem der Ansprüche 4 bis 7, dadurch gekennzeichnet, daß die kegelstumpfförmigen Endflächen (62,64) und die kegelstumpfförmigen Auflageflächen (58,60) nicht selbsthemmend sind.

9. Vorrichtung gemäß einem der Ansprüche 3 bis 8, dadurch gekennzeichnet, daß das erste Teil (24) durch eine feststehende Struktur (18) um die durch den Stehbolzen festgelegte Achse dreh-/schwenkbar gehaltert ist, wobei die Bewegungssteuereinrichtung einen durch die feststehende Struktur gehalterten Motor (14) umfaßt, dessen Ausgangswelle das erste Teil in Drehung versetzt.

10. Vorrichtung gemäß einem der Ansprüche 2 bis 8, dadurch gekennzeichnet, daß der Stehbolzen (46) einen Bereich (74) geringerer Widerstandskraft aufweist, was dessen Dehnung unter der Einwirkung des Elements (72) aus einem Material mit Formgedächtnis während der Zustandsänderung dieses Materials gestattet.

## Claims

1. Device for controlling the retraction of a mobile structure (10), said device comprising displacement control means (14), a transmission mechanism (16), normally connecting said displacement control means to the mobile structure, disconnectable connecting means (28) included in the transmission mechanism, and elastic means (40) permanently acting on the mobile structure (10) in order to automatically bring the latter into a retracted position during a disconnection of the disconnectable connecting means (28), characterized in that it also comprises a memory material member (72) able to act on the disconnectable connecting means (28) in order to control the disconnection thereof, during a state change of the material, and heating means (76) associated with said member in order to control the state change thereof on crossing a predetermined temperature threshold.

2. Device according to claim 1, characterized in that, the transmission mechanism (16) comprising a first part (24) actuatable by displacement control means (14) and a second part (26) carrying the mobile structure (10), the disconnectable connecting means (12) incorporate a tie (46) traversing the first part and the second part, so as to normally join them together by friction.

3. Device according to claim 2, characterized in that the tie (46) defines a pivoting axis of the second part (26) with respect to the first part (24), elastic means (40) permanently exerting a pivoting torque between the first and second parts about said axis.

4. Device according to either of the claims 2 and 3, characterized in that one (24) of the first and second parts has a tubular portion (30) with two truncated cone-shaped end surfaces (62, 64), whilst the other (26) of the first and second parts has two end fittings (48, 52) connected to one another by said tie (46) through the tubular portion, so that the truncated cone-shaped bearing surfaces (58, 60) formed on the end fittings and complimentary of the truncated cone-shaped end surfaces formed on the annular portion are normally pressed against these latter surfaces by the tie.

5. Device according to claim 4, characterized in that the memory material member (72) is a tubular member, mounted on the tie (46) inside the tubular portion (30), so as to be able to move apart the truncated cone-shaped bearing surfaces (58, 60) formed on the end fittings (48, 52) from the truncated cone-shaped end surfaces (62, 64) formed on the tubular portion (30), during a change of state of the material.

6. Device according to claim 5, characterized in that thermally insulating washers (78) are interposed between the end fittings (48, 52) and the memory material member (72).

7. Device according to either of the claims 5 and 6, characterized in that the heating means (76) are placed around the memory material member (72).

8. Device according to any one of the claims 4 to 7, characterized in that the truncated cone-shaped end surfaces (62, 64) and the truncated cone-shaped bearing surfaces (58, 60) are not self-locking.

9. Device according to any one of the claims 3 to 8, characterized in that the first part (24) is supported in pivoting manner by a fixed structure (18) about the axis defined by the tie, the displacement control means comprising a motor (14) supported by the fixed structure and whereof an output shaft rotates the first part.

10. Device according to any one of the claims 2 to 8, characterized in that the tie (46) has a region (74) of reduced resistance allowing its elongation under the action of the memory material member (72), during the change of state of said material.
